# EUROPEAN PATENT APPLICATION

(11) **EP 4 047 738 A1**
(43) Date of publication of application: **24.08.2022**
(21) Application number: 20902171.6
(22) Date of filing: 19.11.2020
(51) Int. Cl.: H01M 50/572, H01M 50/528, H01M 50/531, H01M 10/04

(54) **CYLINDRICAL BATTERY AND METHOD FOR MANUFACTURING CYLINDRICAL BATTERY**

(30) Priority: 17.12.2019 KR 20190169124
(71) Applicant: LG Energy Solution, Ltd., Seoul 07335 (KR)
(72) Inventor: JANG, Jun Yeong, Daejeon 34122 (KR); RYU, Duk Hyun, Daejeon 34122 (KR)
(74) Representative: Goddar, Heinz J.
(86) International application number: PCT/KR2020/016326
(87) International publication number: WO 2021/125585

(57) **Abstract**

The present disclosure relates to a cylindrical battery including: two or more positive electrode tabs; and an insulation member formed at a welding portion of the positive electrode tabs, wherein the insulation member includes a heat shrinkable member and a heat resistant member, and the heat resistant member is formed on at least one surface of the heat shrinkable member.

## Description

### [TECHNICAL FIELD]

### Cross Citation with Related Application(s)

This application claims the benefit of Korean Patent Application No. 10-2019-0169124 filed on December 17, 2019 with the Korean Intellectual Property Office, the disclosure of which is incorporated herein by reference in its entirety.

The present disclosure relates to a cylindrical battery and a method for manufacturing the same.

### [BACKGROUND ART]

Recently, as energy prices are increasing due to the depletion of fossil fuels and increasing attention is being paid to environmental pollution, the demand for environmentally-friendly alternative energy sources acts as an essential factor for future life. Thus, research into techniques for generating various kinds of power, such as nuclear energy, solar energy, wind energy, and tidal power, is underway, and power storage apparatuses for more efficient use of the generated energy are also drawing great attention.

Moreover, the demand for batteries as energy sources is rapidly increasing as mobile device technology continues to develop and the demand for such mobile devices continues to increase. Accordingly, much research on batteries capable of satisfying various needs has been carried out. In particular, in terms of the material for batteries, the demand for lithium secondary batteries, such as lithium ion batteries and lithium ion polymer batteries, which have advantages such as high energy density, discharge voltage, and output stability, is very high.

The secondary battery may be classified based on the structure of an electrode assembly having a structure in which a positive electrode and a negative electrode are stacked with a separator being interposed between therebetween. For example, the electrode assembly may include a jelly-roll (wound) type electrode assembly in which a long sheet type positive electrode and a long sheet type negative electrode are wound with a separator being interposed therebetween, a stacked (laminated) type electrode assembly in which pluralities of positive electrodes and negative electrodes cut into a predetermined size are sequentially stacked with separators being interposed therebetween, and the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly, having an improved structure in which predetermined numbers of positive electrodes and negative electrodes are sequentially stacked with separators being interposed therebetween to constitute a unit cell, after which a plurality of the unit cells is sequentially wound in the state of having been placed on a separation film.

These electrode assemblies are mounted in a pouch case, a cylindrical can, a prismatic case, and the like depending on the purpose of use, thereby manufacturing a battery.

Among them, the cylindrical battery has the advantages of being able to easily manufacture and having a high energy density per weight, and thus, is widely used as an energy source for various devices such as electric vehicles, portable computers, and portable electric tools.

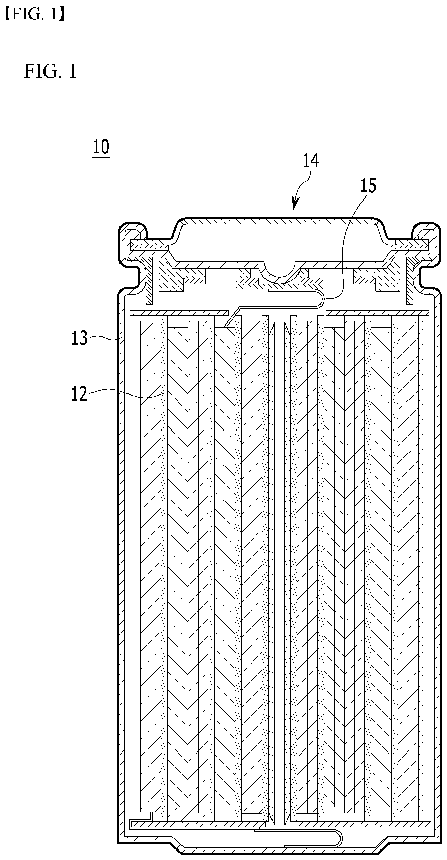

FIG. 1 is a schematic cross-sectional view showing a conventional cylindrical battery.

Referring to FIG. 1, the cylindrical battery 10 is manufactured by mounting a jelly-roll type electrode assembly 12 in a cylindrical case 13, injecting an electrolyte solution in the cylindrical case 13, mounting a top cap 14 to an opened upper end of the cylindrical case 13 and electrically connecting the positive electrode tab 15 to the top cap 14 .

Recently, the demand for a cylindrical battery for high output has increased, and for this purpose, a cylindrical battery having a plurality of positive electrode tabs is manufactured.

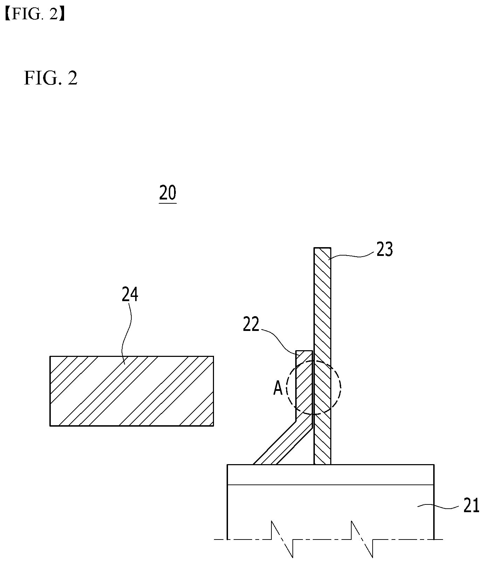

FIG. 2 is a schematic cross-sectional view showing a conventional cylindrical battery having two positive electrode tabs.

Referring to FIG. 2, the cylindrical battery 20 includes a first positive electrode tab 22 and a second positive electrode tab 23 which are electrically connected to the electrode assembly 21. A part of the first positive electrode tab 22 is welded to the second positive electrode tab 23 under a bent state. For convenience of description, the battery case and the top cap are not shown.

In a charge and discharge process of the cylindrical battery 20, a considerable amount of thermal energy is generated in the first positive electrode tab 22 and the second positive electrode tab 23, which raises an internal temperature of the cylindrical battery and induces thermal damage to the surrounding components. In addition, when spatter generated in the process of welding the first positive electrode tab 22 and the second positive electrode tab 23 is detached from the welding portion A, this may cause an internal short circuit. Therefore, the welding portion A of the first positive electrode tab 22 and the second positive electrode tab 23 wraps using an insulation member 24.

Through such a structure, the internal temperature of the cylindrical battery 20 can be prevented from rising due to a thermal energy generated in the positive electrode tabs 22 and 23, and spatter can be prevented from being detached from the welding portion A.

However, the cylindrical battery 20 for high output generates a considerable amount of thermal energy in a charge and discharge process, which causes a problem that the insulation member 24 melts.

### [DETAILED DESCRIPTION OF THE INVENTION]

### [Technical Problem]

It is an object of the present disclosure to provide a cylindrical battery having a heat resistant insulation member, and a method for manufacturing the same.

However, the problem to be solved by the embodiment of the present disclosure is not limited to the above-mentioned problem, and can be variously expanded within the scope of the technical idea included in the present disclosure.

### [Technical Solution]

According to one embodiment of the present disclosure, there is provided a cylindrical battery comprising: two or more positive electrode tabs; and an insulation member formed at a welding portion of the positive electrode tabs, wherein the insulation member comprises a heat shrinkable member and a heat resistant member, and the heat resistant member is formed on at least one surface of the heat shrinkable member.

The heat resistant member may include an inorganic material.

The inorganic material may include beta-alumina (β-Al₂O₃).

The heat resistant member may be a PVDF-HFP (polyvinylidene fluoride-co-hexafluoropropylene) polymer adhesive layer.

The heat resistant member has a structure in which a slurry containing the inorganic material is coated onto the heat shrinkable member.

The heat resistant member is formed on both surfaces of the heat shrinkable member corresponding to each other.

The heat shrinkable member may be any one of polyethylene terephthalate, polyethylene naphthalate, polyimide and polyethyleneimine, or a mixture of two or more thereof.

A portion where the heat resistant member is formed in the heat shrinkable member may not be shrunk by heat.

The insulation member may be fixed to the welding portion of the positive electrode tabs by a shrinking force when the heat shrinkable member heat-shrinks.

When heat shrinking of the insulation member is completed, a size of the insulation member may be equal to or larger than the size of the heat resistant member.

The heat resistant member may be located in the center section inside the insulation member.

A large number of the heat resistant members may be formed at regular intervals in the heat shrinkable member.

According to another embodiment of the present disclosure, there is provided a method for manufacturing a cylindrical battery, the method comprising the steps of: manufacturing a jelly-roll type electrode assembly in which two or more positive electrode tabs are formed; welding the positive electrode tabs to connect them to each other; locating an insulation member at a portion where the positive electrode tabs are welded; and applying heat to the insulation member to heat-shrink the insulation member.

The insulation member may include a heat shrinkable member and a heat resistant member, and the heat resistant member may be formed on at least one surface of the heat shrinkable member.

The heat resistant member may be dried in a state where an inorganic material slurry is coated onto the heat shrinkable member.

In the step of locating an insulation member at the portion where the positive electrode tabs are welded, the insulation member has a ring shape, and the insulation member may be inserted in the welding portion in a structure that wraps the welding portion.

### [ADVANTAGEOUS EFFECTS]

As described above, the cylindrical battery according to the embodiment of the present disclosure can include an insulation member in which an inorganic material coating layer is formed, thereby preventing the insulation member from melting due to a thermal energy generated at the welding portion of the electrode tabs.

### [BRIEF DESCRIPTION OF THE DRAWINGS]

FIG. 1 is a schematic cross-sectional view showing a conventional cylindrical battery.
FIG. 2 is a schematic cross-sectional view showing a conventional cylindrical battery having two positive electrode tabs.
FIG. 3 is a schematic cross-sectional view showing a cylindrical battery according to an embodiment of the present disclosure.
FIG. 4 is a schematic plan view showing that the insulation member of FIG. 3 is unfolded before heat-shrinking.
FIG. 5 is a schematic side view showing the insulation member of FIG. 4.
FIG. 6 is a schematic plan view showing that the insulation member of FIG. 4 is shrunk by heat.
FIG. 7 is a schematic cross-sectional view showing an insulation member according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

In addition, throughout the specification, when an element "comprises" or "includes" a component, it may indicate that the element does not exclude another component, but can further include another component, unless referred to the contrary.

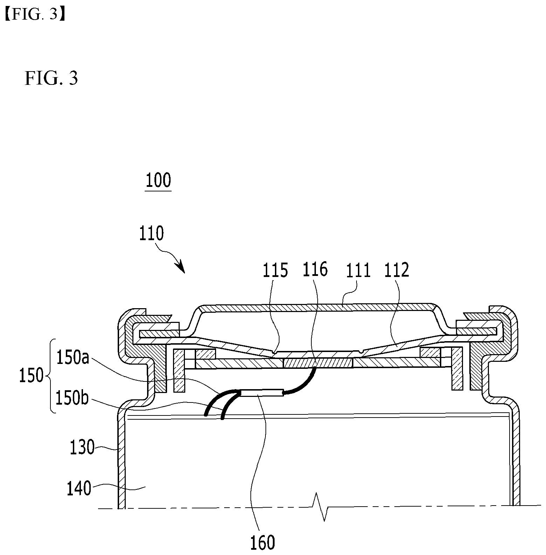

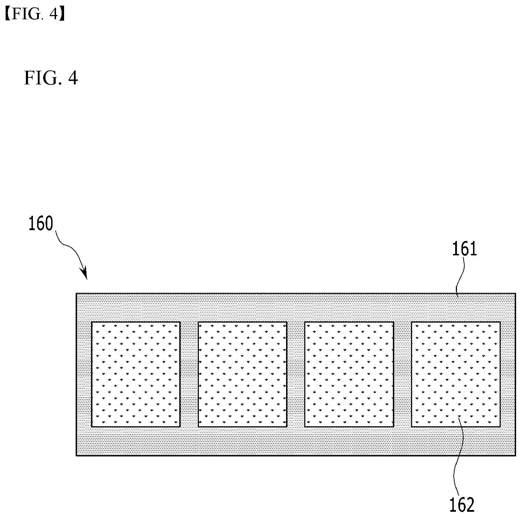

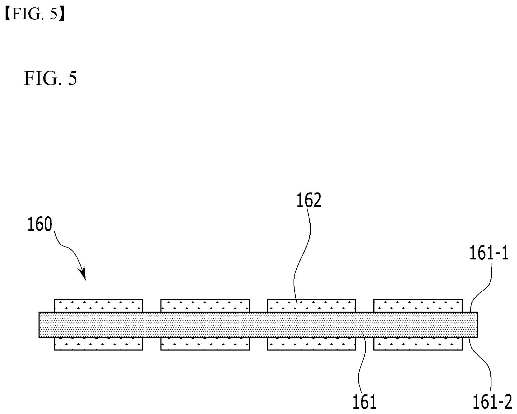

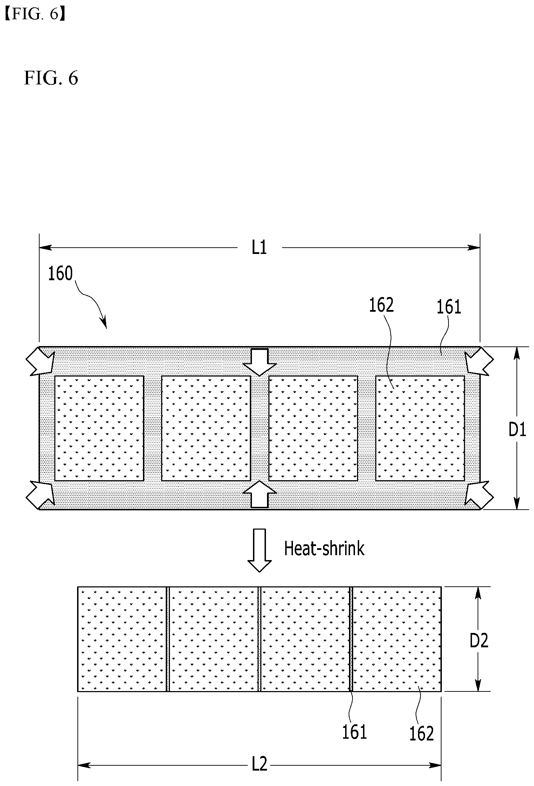

FIG. 3 is a schematic cross-sectional view showing a cylindrical battery according to an embodiment of the present disclosure. FIG. 4 is a schematic plan view showing that the insulation member of FIG. 3 is unfolded before heat-shrinking. FIG. 5 is a schematic side view showing the insulation member of FIG. 4. FIG. 6 is a schematic plan view showing that the insulation member of FIG. 4 is shrunk by heat.

Referring to FIGS. 3 to 6, a cylindrical battery 100 may be configured such that a jelly-roll type electrode assembly 140 is inserted into a metal can 130, and a cap assembly 110 is mounted on the open top of the metal can 130. The cap assembly 110 may include a top cap 111, a safety vent 112, and a current interruption member 116.

The top cap 111 may form a positive electrode terminal in a shape to protrude to the outside of the cylindrical battery 100. The top cap 111 may be electrically connected to the safety vent 112 along the edge of the safety vent 112. The safety vent 112 may be formed with a predetermined notch 115 so that it is ruptured by the high-pressure gas of the cylindrical battery 100. The safety vent 112 maintains a structure that projects downward when the cylindrical battery 100 operates normally. However, when gas is generated inside the cylindrical battery 100 and the internal pressure rises, the safety vent 112 may protrude upward and rupture to discharge an internal gas.

The current interruption member 116 may interrupt the current to eliminate an internal pressure when the cylindrical battery 100 operates abnormally. The current interruption member 116 may be mounted in a space between the electrode assembly 140 and the safety vent 112.

The positive electrode tab 150 may include a first positive electrode tab 150a and a second positive electrode tab 150b. An insulation member 160 may be formed at a welding portion (not shown) of the first positive electrode tab 150a and the second positive electrode tab 150b. The insulation member 160 may be formed in a structure that wraps the welding portion.

The insulation member 160 may include a heat shrinkable member 161 and a heat resistant member 162. The heat shrinkable member 161 is not particularly limited, but may be a heat shrinkable film that can shrink when heated to a specific temperature. The shrinkage temperature of the heat shrinkable member 161 may be 120 to 200 degrees Celsius. The welding portion of the positive electrode tabs 150 may be tightened by a shrinking force generated when the heat shrinkable member 161 is shrunk. The heat shrinkable member 161 may be heated and shrunk by a heating jig (not shown) or a hot air blower (not shown).

The melting point of the heat shrinkable member 161 may be 300 to 400 degrees Celsius. The heat shrinkable member 161 may be any one of polyethylene terephthalate, polyethylene naphthalate, polyimide and polyethyleneimine, or a mixture of two or more thereof.

The insulation member 160 may have a structure in which a heat resistant member 162 is partially formed on the heat shrinkable member 161. The heat shrinkable member 161 may include a first surface 161-1 and a second surface 161-2 positioned on an opposite side of the first surface 161-1. The heat resistant member 162 may be formed on both the first surface 161-1 and the second surface 161-2. As a modification, the heat resistant member 162 may be formed only on the first surface 161-1 or the second surface 161-2.

The heat resistant member 162 is not particularly limited if it has excellent heat resistance, but may include an inorganic material as an example. Further, the heat resistant member 162 may be a coating layer in which a slurry containing an inorganic material is coated onto the heat shrinkable member 161.

The inorganic material may be beta alumina (β-Al₂O₃).

The heat resistant member 162 may be a PVDF-HFP (polyvinylidene fluoride-co-hexafluoropropylene) polymer adhesive layer. The PVDF-HFP polymer adhesive layer may have a structure in which the inorganic material is bonded to a polymer resin by PVDF-HFP.

When the cylindrical battery 100 operates abnormally, the internal temperature rises from 500 to 600 degrees Celsius. In general, since the melting point of the inorganic material is 2000 degrees Celsius or more, the inorganic material may not be melted even at a temperature rapidly raised due to the abnormal operation of the cylindrical battery 100. Therefore, the portion where the inorganic material is coated onto the heat shrinkable member 161 may not melt even at a high temperature raised due to the abnormal operation of the cylindrical battery 100.

The shape of the heat shrinkable member 161 is not particularly limited, but as an example, it may be a rectangular shape having a length L1 longer than the width D1. The shape of the heat resistant member 162 is also not particularly limited, but may be a rectangular shape as an example.

The portion where the heat resistant member 162 is formed in the heat shrinkable member 161 does not shrink when the heat shrinkable member 161 shrinks. Therefore, the heat shrinkable member 161 may shrink from the length L1 to the length L2. In addition, the heat shrinkable member 161 may shrink from the width D1 to the width D2 .

Assuming that the length of the heat shrinkable member 161 before heat-shrinking is L1 and the length after heat-shrinking is L2, the shrinking force when the heat shrinkable member 161 heat-shrinks is proportional to the difference between the length L1 and the length L2. That is, the shrinking force becomes stronger as the difference between the length L1 and the length L2 is larger, and it becomes weaker as the difference between the length L1 and the length L2 is smaller.

Similarly, assuming that the width of the heat shrinkable member 161 before heat-shrinking is D1 and the width after heat-shrinking is D2, the shrinking force when the heat shrinkable member 161 heat-shrinks is proportional to the difference between the width D1 and the width D2. That is, the shrinking force becomes stronger as the difference between the width D1 and the width D2 is larger, and it becomes weaker as the difference between the width D1 and the width D2 is smaller.

The insulation member 160 may be fixed to the welding portion A of the first positive electrode tab 150a and the second positive electrode tab 150b by a shrinking force when the heat shrinkable member 161 heat-shrinks. Since the portion where the heat resistant member 162 is formed in the heat shrinkable member 161 does not shrink, when shrinkage of the heat shrinkable member 161 is completed, the size of the heat shrinkable member 161 may be substantially the same as or larger than the size of the heat resistant member 162. Here, the size means an area obtained by multiplying the lengths L1 and L2 by the widths D1 and D2. Therefore, when the heat-shrinkage of the insulation member 160 is completed, the size of the insulation member 160 may be substantially the same as or larger than the size of the heat resistant member 162.

Thus, an operator can determine the space occupied by the heat resistant member 162 in the heat shrinkable member 161, considering the final size of the insulation member 160 upon completion of the heat-shrinkage and the shrinkage force exerted by the heat shrinkable member 161.

In one example, the heat resistant member 162 is preferably located in the center section inside the insulation member 160 so that the edge of the insulation member 160 can be shrunk. Here, the "center section inside" refers to a portion where the middle of the length L1 and the middle of the width D1 of the insulation member 160 intersect. In addition, the heat resistant member 162 may have a rectangular shape, and a large number of heat resistant members 162 may be formed in the heat shrinkable member 161.

When a large number of heat resistant members 162 are formed in the heat shrinkable member 161, the heat resistant members 162 may be formed at regular intervals between each other so that a constant shrinkage force is formed on the heat shrinkable members. Through this, it is possible to prevent wrinkles from occurring after the heat shrinkable member 161 is shrunk. It goes without saying that the heat resistant member 162 may be formed in the heat shrinkable member 161 at various intervals.

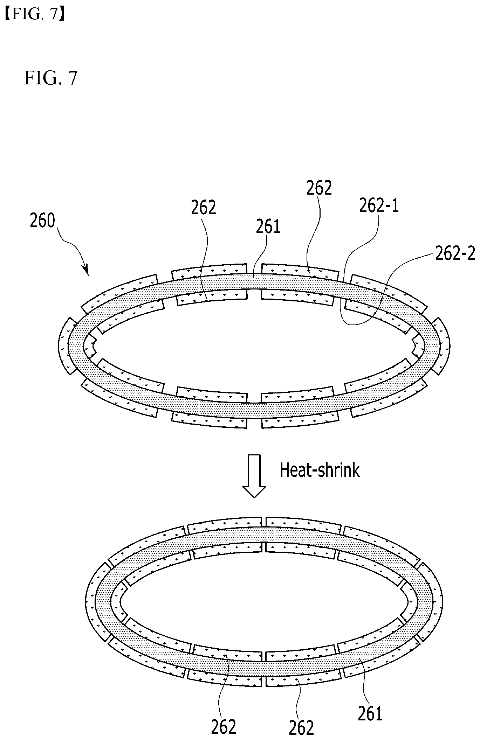

FIG. 7 is a schematic cross-sectional view showing an insulation member according to another embodiment of the present disclosure.

Referring to FIG. 7, the insulation member 260 may include a heat shrinkable member 261 and a heat resistant member 262. The insulation member 260 may be in the shape of a ring. This may be a structure in which both sides in the longitudinal direction of the heat shrinkable member 261 having a long length compared to the width are connected to each other. The heat shrinkable member 261 may include a first surface 262-1 and a second surface 262-2, and may have a structure in which the first surface 262-1 directs toward the outside, and the second surface 262-2 directs toward the inside.

In addition, a large number of heat resistant members 162 may be formed in the first surface 262-1 and the second surface 262-2 of the heat shrinkable member 261. The heat resistant members 162 may be formed at regular or various intervals from each other.

The insulation member 260 can wrap the welding portion of the positive electrode tabs with the shrinking force generated while the heat shrinkable member 261 shrinks by a separation space between the heat resistant members 162. For convenience of explanation, the positive electrode tab and the welding portion are not shown, but may have the same structure as the positive electrode tabs 22 and 23 and the welding portion A shown in FIG. 2. The ring-shaped insulation member 260 may be inserted into the welded portion in a structure that wraps the welding portion.

The structure as described above allows the insulation member 260 to firmly fix to the welding portion, and to improve productivity by simplifying the manufacturing process.

It will be appreciated by those skilled in the art that various applications and modifications can be made without departing the sprit and scope of the invention based on the above description.

## Claims

1. A cylindrical battery comprising:
two or more positive electrode tabs; and
an insulation member formed at a welding portion of the positive electrode tabs,
wherein the insulation member comprises a heat shrinkable member and a heat resistant member, and the heat resistant member is formed on at least one surface of the heat shrinkable member.

2. The cylindrical battery of claim 1, wherein:
the heat resistant member includes an inorganic material.

3. The cylindrical battery of claim 2, wherein:
the inorganic material includes beta-alumina (β-Al₂O₃).

4. The cylindrical battery of claim 2, wherein:
the heat resistant member has a structure in which a slurry containing the inorganic material is coated onto the heat shrinkable member.

5. The cylindrical battery of claim 1, wherein:
the heat resistant member is a PVDF-HFP (polyvinylidene fluoride-co-hexafluoropropylene) polymer adhesive layer.

6. The cylindrical battery of claim 1, wherein:
the heat resistant member is formed on both surfaces of the heat shrinkable member corresponding to each other.

7. The cylindrical battery of claim 2, wherein:
the heat shrinkable member is any one of polyethylene terephthalate, polyethylene naphthalate, polyimide and polyethyleneimine, or a mixture of two or more thereof.

8. The cylindrical battery of claim 1, wherein:
a portion where the heat resistant member is formed in the heat shrinkable member is not shrunk by heat.

9. The cylindrical battery of claim 1, wherein:
the insulation member is fixed to a welding portion of the positive electrode tabs by a shrinking force when the heat shrinkable member heat-shrinks.

10. The cylindrical battery of claim 1, wherein:
when heat shrinkage of the insulation member is completed, a size of the insulation member is equal to or larger than the size of the heat resistant member.

11. The cylindrical battery of claim 1, wherein:
the heat resistant member is located in the center section inside the insulation member.

12. The cylindrical battery of claim 1, wherein:
a large number of the heat resistant members are formed at regular intervals in the heat shrinkable member.

13. A method for manufacturing a cylindrical battery, the method comprising the steps of:
manufacturing a jelly-roll type electrode assembly in which two or more positive electrode tabs are formed;
welding the positive electrode tabs to connect them to each other;
locating an insulation member at a portion where the positive electrode tabs are welded; and
applying heat to the insulation member to heat-shrink the insulation member,
wherein the insulation member comprises a heat shrinkable member and a heat resistant member, and the heat resistant member is formed on at least one surface of the heat shrinkable member.

14. The method of claim 13, wherein:
the heat resistant member is dried in a state where an inorganic material slurry is coated onto the heat shrinkable member.

15. The method of claim 13, wherein:
in the step of locating an insulation member at the portion where the positive electrode tabs are welded, the insulation member has a ring shape, and the insulation member is inserted in the welding portion in a structure that wraps the welding portion.
